Europäisches Patentamt

European Patent Office

Office européen des brevets

(19)

(11) Publication number: **0 086 060**
**B1**

(12) **EUROPEAN PATENT SPECIFICATION**

(45) Date of publication of patent specification: **16.04.86**

(21) Application number: **83300414.6**

(22) Date of filing: **26.01.83**

(51) Int. Cl.⁴: **B 65 D 85/68,** B 65 D 67/00,
F 15 B 15/00

(54) **Shipping and installation strap for linear actuator.**

(30) Priority: **01.02.82 US 344495**
**13.09.82 US 417336**

(43) Date of publication of application:
**17.08.83 Bulletin 83/33**

(45) Publication of the grant of the patent:
**16.04.86 Bulletin 86/16**

(84) Designated Contracting States:
**BE DE FR GB IT SE**

(56) References cited:
**FR-E- 77 316**
**US-A-3 698 545**

(73) Proprietor: **AUTOMOTIVE PRODUCTS PUBLIC**
**LIMITED COMPANY**
**Tachbrook Road**
**Leamington Spa Warwickshire CV31 3ER (GB)**

(72) Inventor: **Nix, Richard**
**45482 Hecker**
**Utica, MI 48087 (US)**
Inventor: **Leigh-Monstevens, Keith Vernon**
**774 Royal Coachman Apt 5**
**Troy, MI 48084 (US)**

(74) Representative: **Farrow, Robert Michael**
**Patent Department Automotive Products plc**
**Tachbrook Road**
**Leamington Spa Warwickshire CV31 3ER (GB)**

EP 0 086 060 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus and method for shipping and installing a linear actuator. More particularly, the present invention relates to shipping and installation straps for holding in a retracted position the output member of a linear actuator, such as a hydraulic actuator, during transportation and storage and during installation of the actuator for operation of a mechanism.

Hydraulic actuator apparatus are known for operating a mechanism at a remote location by way of a master cylinder, for example, connected to a slave cylinder installed at the remote location. A conduit interconnects the master cylinder to the slave cylinder, and the hydraulic apparatus is filled with hydraulic fluid such that when the piston of the master cylinder is actuated, the piston of the slave cylinder, and consequently the piston rod or output member of the slave cylinder, is simultaneously actuated by displacement of the hydraulic fluid from the master cylinder to the slave cylinder through the conduit.

More particularly, it is known to provide such hydraulic apparatus for operating, for example, the release mechanism of a friction clutch. As disclosed in GB—A—1,539,879, it is also known to pre-assemble friction clutch hydraulic release apparatus, by filling with hydraulic fluid the master cylinder, the slave cylinder, the conduit interconnecting the cylinders and a reservoir connected to the master cylinder, and bleeding the system before shipment of the assembly to a motor vehicle manufacturer, for installation on a motor vehicle. Preferably, the hydraulic apparatus is filled with fluid maintained by a resilient diaphragm disposed in the reservoir of fluid, at a pressure slightly higher than atmospheric pressure to prevent introduction of atmospheric air into the system during transportation, storage and installation. Prior to installation, the piston rod, or output member, projecting from one end of the slave cylinder may become extended such that the over-all length of the slave cylinder, with the piston rod extended, may occupy more space then necessary in the shipping container, the rod may become bent or damaged while in transit or storage or become disconnected from the piston, the pressure of the fluid may drop below atmospheric pressure, thus causing air to be introduced into the hydraulic apparatus and the slave cylinder piston rod must be manually retracted, and held retracted during installation of the apparatus in the motor vehicle.

The principal object of the present invention, therefore, is to provide a restraining strap for the output member of a linear actuator such as the piston rod of a slave cylinder of a pre-filled subassembly comprising a master cylinder, a slave cylinder and a conduit interconnecting the master cylinder with the slave cylinder. The object of the invention is achieved by providing a flexible, preferably plastic, strap having a portion maintaining the slave cylinder piston rod in a retracted position by attaching the end of the piston rod to the housing of the slave cylinder, the strap having appropriate weakened break-away sections defining one or more rupture portions, such that when the piston of the master cylinder is actuated for the first time, thus causing a thrust to be applied to the piston and piston rod of the slave cylinder, the strap is broken and the apparatus is enabled to operate in a normal manner.

Another object of the present invention is to provide a shipping and installation restraining strap more particularly for the piston rod of a slave cylinder adapted to operate a motor vehicle clutch release mechanism having a recess receiving the end of the piston rod, and to provide a separate or separable nosepiece for the slave cylinder piston rod end forming a bearing member interposed between the rod end and the surface of the recess, and arranged such that the nosepiece is made integrally with or attached to the bands or strips of the restraining strap.

A further object of the invention is to provide the bearing-nosepiece with an integral seal member preventing introduction of dirt between the bearing surface of the nosepiece and the surface of the recess in the clutch actuating member.

These and other objects and advantages of the present invention will become apparent to those skilled in the art when the following description of examples of the best modes contemplated for practicing the invention is read in conjunction with the accompanying drawing wherein:

FIG. 1 is a schematic illustration of a hydraulic apparatus having a slave cylinder, shown partially in section and provided with an example of structure for a shipping and installation restraining strap according to the present invention;

FIG. 2 is a partial view similar to FIG. 1, but showing the broken strap after the first operation of the apparatus;

FIG. 3 is a front elevation view from line 3—3 of FIG. 1;

FIG. 4 is a side elevation view of the restraining strap of FIGS. 1—3;

FIG. 5 is a plan view thereof as seen from lines 5—5 of FIG. 4;

FIG. 6 is a partial view similar to FIG. 1, but showing a modification of the restraining strap according to the present invention;

FIG. 7 is a view similar to FIG. 6, but showing the condition of the strap after operation of the slave cylinder;

FIG. 8 is a side elevation view of the example of strap of FIG. 6;

FIG. 9 is a plan view thereof;

FIG. 10 is a view similar to FIG. 6, but showing a further modification of a restraining strap according to the present invention;

FIG. 11 is a view similar to FIG. 10, but showing the condition of the strap after operation of the slave cylinder;

FIG. 12 is a view similar to FIG. 6, but showing another modification of a restraining strap according to the present invention;

FIG. 13 is a view similar to FIG. 12 but showing the condition of the strap after operation of the slave cylinder;

FIG. 14 is a side elevation view of the restraining strap of FIG. 12;

FIG. 15 is a rear elevation view thereof as seen from line 15—15 of FIG. 14;

FIG. 16 is a schematic illustration of a hydraulic slave cylinder provided with another example of structure for shipping and installation restraining strap according to the present invention and shown partially in section;

FIG. 17 is a cross-section from line 17—17 of FIG. 16;

FIG. 18 is a partial section from line 18—18 of FIG. 16;

FIG. 19 is a partial view similar to FIG. 16, but showing the broken strap after the first operation of the apparatus;

FIG. 20 is a side elevational view of the restraining strap of FIGS. 16—19;

FIG. 21 is a plan elevation view thereof from line 21—21 of FIG. 20;

FIG. 22 is an elevation view, with portion broken away, of the rod end nosepiece associated with the restraining strap of FIGS. 20—21;

FIGS. 23 and 24 are respectively front and rear views of the nosepiece of FIG. 22;

FIG. 25 is a partial view similar to FIG. 16 but showing a modification of the restraining strap according to the present invention;

FIG. 26 is an exploded perspective view of the restraining strap of FIG. 25;

FIG. 27 is a view similar to FIG. 16 but showing a modification of the invention providing a combination restraining strap nosepiece and seal;

FIG. 28 is a partial section along line 28—28 of FIG. 27;

FIGS. 29—31 are respectively side elevation views with portion broken away, and front and rear views of the nosepiece of FIG. 27;

FIG. 32 is a view similar to FIG. 25 but showing a further modification of the invention;

FIG. 33 is a side elevation view of the restraining strap of FIG. 32; and

FIG. 34 is a rear elevation view thereof.

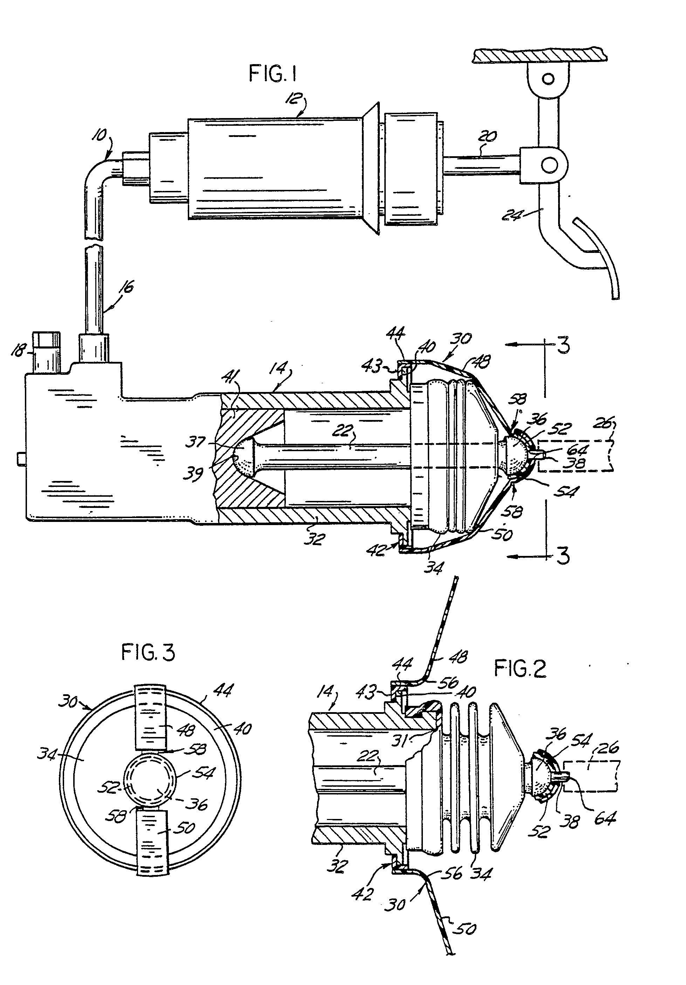

Referring now to the drawing and more particularly to FIG. 1, there is schematically illustrated a hydraulic apparatus assembly 10 comprising a master cylinder 12 hydraulically interconnected to a slave cylinder 14 by means of a conduit 16, in the form of a flexible hose, for example. After assembly of the diverse components, the whole apparatus is filled with a hydraulic fluid under slight pressure and bled to remove air from the apparatus by way of a bleed valve 18, mounted for example on the slave cylinder 14, until all air has escaped from the apparatus. Alternatively, atmospheric air is evacuated from the apparatus and the apparatus filled with hydraulic fluid at a pressure slightly higher than atmospheric pressure.

An additional reservoir of hydraulic fluid, not shown, is connected to the master cylinder 12. The reservoir hydraulic fluid may take the form of a built-in reservoir integral with, or directly attached, to the master cylinder housing, or it may be a remotely located reservoir connected by a conduit to the master cylinder 12. The hydraulic fluid is maintained during transport, storage and installation at a pressure slightly higher than atmospheric pressure by an accumulator consisting, for example, of a resilient diaphragm disposed in the fluid reservoir.

As is well known, any displacement of the master cylinder piston rod 20 causes a corresponding displacement of the piston rod or actuator 22 of the slave cylinder 14, as a result of transferring a portion of the hydraulic fluid from the master cylinder 12 through the conduit 16 to the slave cylinder 14. The piston rod 20, or input member, of the master cylinder 12 may be operated, for example, by the clutch release pedal 24 of a motor vehicle, the master cylinder 12 being installed, for example, below the floorboard of the motor vehicle driver compartment, the slave cylinder 14 being attached on the underframe of the vehicle in an appropriate position such that the end of its piston rod 22 actuates the release mechanism 26 of the motor vehicle friction clutch, not shown.

During assembly of the slave cylinder 14, a shipping and installation strap 30 is installed, according to the present invention, such as to restrain the slave cylinder piston rod 22 from extending beyond a certain limit from the open end 31 of the slave cylinder housing 32, Fig. 2. An elastomeric bellows boot 34 has an end affixed to the rim of the cylinder housing 32 and another end elastically engaging a portion of the peripheral surface of the piston rod 22 for the purpose of protecting the covered portion of the piston rod 22 from the ambient and preventing introduction of foreign matter and dirt into the open end 31 of the cylinder housing 32 through which the rod 22 projects. In the structure illustrated, the end of the rod 22 projecting from the slave cylinder housing 32 has a hemispherical portion 36, provided with a reduced diameter coaxial projecting pin-like member 38 for engagement and centering with the end of the clutch release mechanism 26. The other end of the rod 22 has a hemispherical enlarged portion 37 freely engaged in a corresponding tapered hemispherical recess 38 formed at the bottom of the slave cylinder piston 41.

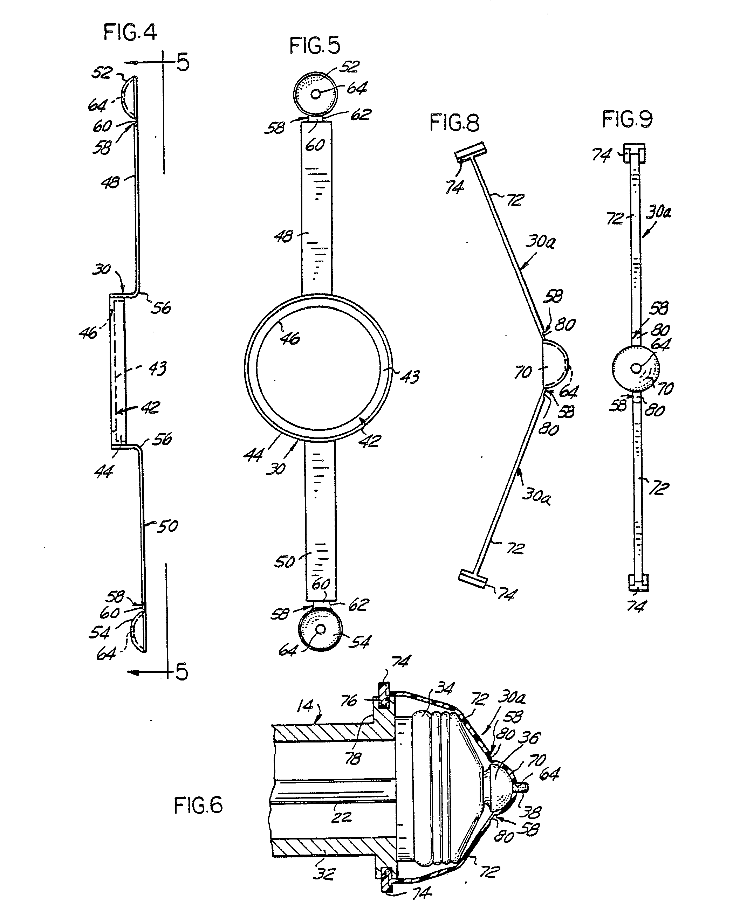

The slave cylinder housing 32 is provided with a peripheral annular flange 40, and the strap 30 has a corresponding annular flange collar 42, comprising an annular flange 43 formed on one side of a cylindrical rim 44 fitting over the housing annular flange 40, the strap annular flange 43 forming an opening 46, FIGS. 4 and 5, fitting over the slave cylinder housing 32. A pair of diametrally disposed bands or strips 48 and 50 are heat-welded to, or molded integrally with, the rim 44 of the flange collar 42 at one of their ends and provided with a nosepiece or retaining member in the form of a partially spherical cup member, 52 and 54 respectively, at their other end. The strap 30 is preferably molded of plastic such as a polyamide (nylon), and the bands or strips 58—50 are relatively flexible. The strap 30 is molded in the shape illustrated at FIGS. 4 and 5, i.e. with a pre-formed bend 56 proximate the end of each band or strip 48 or 50 joined to the rim 44 of the flange collar 42. The other end of each band or strip 48—50 is provided with a weakened portion 58 where it is integrally molded with the partially spherical cup member 52—54, each weakened portion 58 being in the form of a reduced thickness portion as shown at 60, resulting from a surface groove, most clearly shown at FIG. 4, or a reduced width portion, as shown at 62 at FIG. 5, or both.

The partially spherical cup members 52 and 54 are each provided with a central aperture 64 through which passes the pin-like projection 38 on the piston rod end 36, when the strap 30 is installed during assembly of the apparatus in the position illustrated at FIG. 1, with the partially spherical cup members 52 and 54 disposed over the hemispherical end 36 of the piston rod 22, such as to maintain the piston rod 22 in a retracted and centered position.

After installation of the hydraulic apparatus 10 in a motor vehicle, the first time the clutch release mechanism is actuated by operating the clutch pedal 24, hydraulic fluid is supplied from the master cylinder 12, when the piston rod 20 of the master cylinder is reciprocated, to the slave cylinder 14 through the line or conduit 16, such that the slave cylinder piston rod 22 is extended, for example to the position shown at FIG. 2. Although the weakened portions 58 of the bands or strips 48—50 of the strap 30 are capable of holding the slave cylinder piston rod 22 in its retracted and centered position during shipping, storage and installation of the hydraulic apparatus 10 in a motor vehicle, the force exerted on the slave cylinder piston 41 during the first operation of the clutch release causes the strap bands or strips 48 and 50 to break away from the cup members 52 and 54, respectively, when the piston rod 22 is extended, thus subsequently permitting normal operation of the hydraulic apparatus 10.

Although the strap 30 may be molded of any convenient flexible plastic, polyamide plastic such as nylon type 6/6, for example sold by E. I. DuPont de Nemours & Co. under the trademark Zytel has been found particularly convenient, the strap bands or strips 48 and 50 having a thickness, for example of 0.6 to 1 mm, and a width of 8 to 12 mm., with a break-out groove 60 0.15 to 0.3 mm. in depth and/or a reduction in width of each band or strip at the junction with the cup members 52 and 54, as shown at 62 at FIG. 5, being slightly more than one-half the width of the bands or strips themselves.

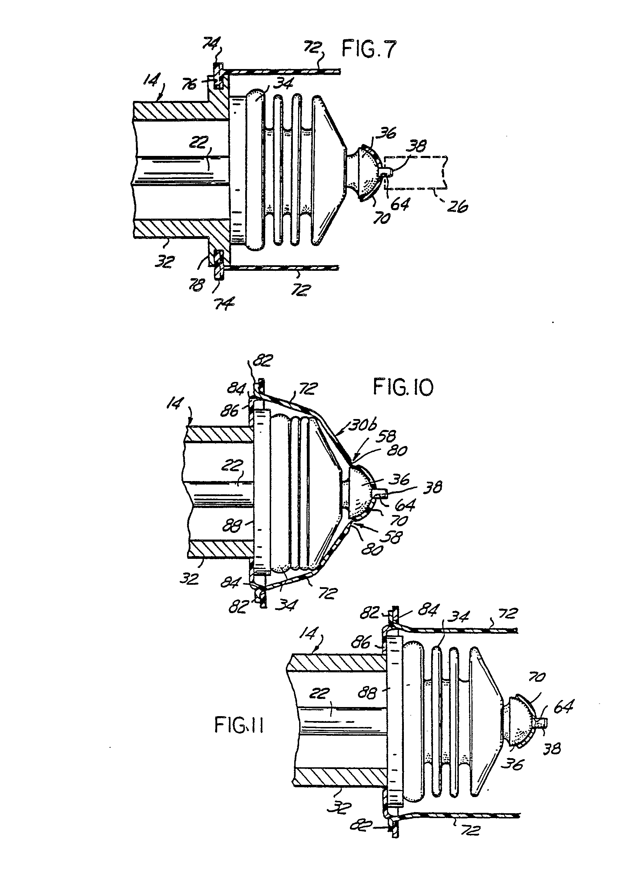

The present invention is susceptible of various modifications for accomplishing its objects of convenience of shipping and installation of pre-filled hydraulic apparatus. An example of such modification is illustrated at FIGS. 6—9 wherein a shipping and installation strap 30a is illustrated as comprising a single cup-shaped piston rod retaining member 70, disposed over the end 36 of the piston rod 22 of a slave cylinder 14, FIG. 6, provided with diametrically disposed bands or strips 72 each having an integral strut 74 formed on the end thereof, substantially at right angle to the axis of each band or strip. The inner end of each strut 74 is introduced in a receiving recess 76 formed in an annular flange 78 disposed proximate the end of the slave cylinder housing 32. A weakened portion 58 in the form of a break-away groove, as shown at 80, is formed at the junction between the other end of each band or strip 72 and the cup-shaped retaining member 70 such that, when hydraulic fluid is fed to the slave cylinder 14, thus causing its piston rod 22 to extend, the bands or strips 72 separate at the weakened portions 58 from the cup-shaped retaining member 70 and free the piston rod 22 for normal operation, as illustrated at FIG. 7.

In such an arrangement, with the struts 74 relatively loosely fitted in the receiving recesses 76 in the slave cylinder annular flange 78, after the bands or strips 72 become separated from the cup-shaped retaining member 70 in the course of the first release of the motor vehicle friction clutch, which generally occurs at the end of the assembly line, the bands or strips 72 generally drop off. If they remain attached to the slave cylinder housing, they do not interfere with normal operation of the clutch.

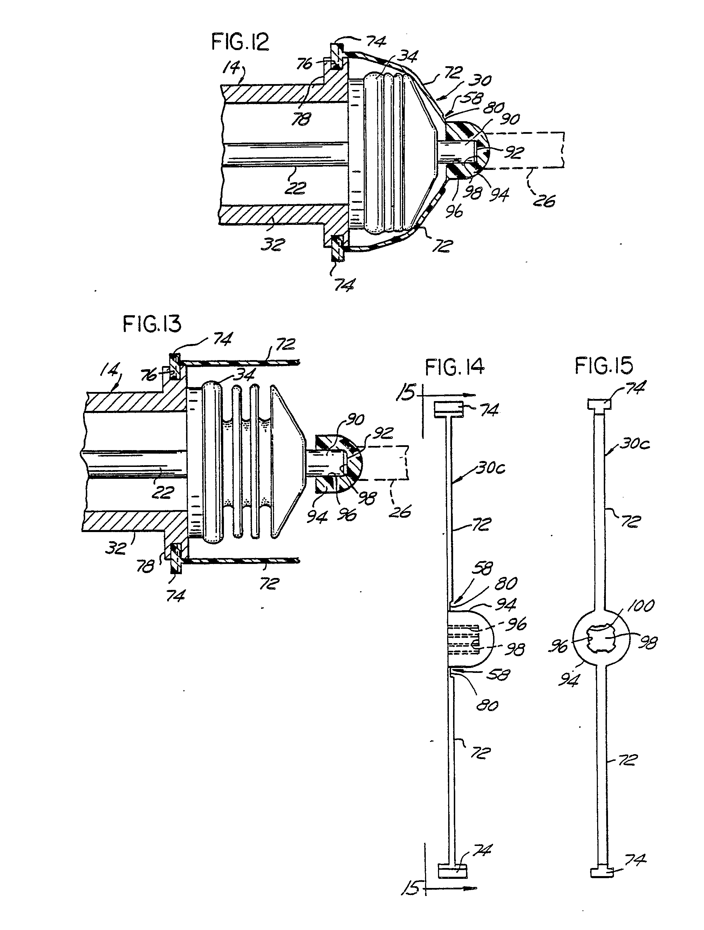

At FIGS. 10—11 there is illustrated a further modification 30b of a shipping and installation strap according to the present invention for restraining and centering the output member of a linear actuator, such as the piston rod 22 of a slave cylinder 14, in its retracted position until the linear actuator or slave cylinder, is first operated. The restraining strap 30b is substantially alike the strap 30a of FIGS. 6—9, the bands or strips 72 being, however, provided on their free end with a lug 82 snapped through an aperture 84 disposed in a ring such as the metallic ring 86 slipped over the cylinder housing 32 and adapted to engage an annular flange 88 on the peripheral surface of an end of the housing 32. When fluid is first applied, after installation of the hydraulic apparatus, to the slave cylinder 14, causing the piston rod 22 to extend, the weakened portion 58 formed by the break-away groove 80 at the junction between the bands or strips 72 and the cup-shaped retaining member 70 causes the bands or strips 72 to separate from the retaining member, as shown at FIG. 11, thus permitting the piston rod 22 to operate in the usual manner. The loose bands or strips 72 also generally fall off during first operation of the hydraulic apparatus.

It will be appreciated by those skilled in the art that the retaining members 52—54 and 70 of the straps 30, FIGS. 1—5, 30a, FIGS. 6—9, and 30b, FIGS. 10—11, are adapted to restrain and center the end of a linear actuator output member, such as the piston rods 22 provided with a hemispherical portion 36, whether or not the hemispherical portion 36 has a reduced diameter coaxial projecting pin-like member 38. The strap retaining members 52—54, FIGS. 1—5, and 70, FIGS. 6—11, do not interfere with the operation of the clutch release mechanism, and they may eventually wear out or fall off without affecting the operation of the clutch release mechanism.

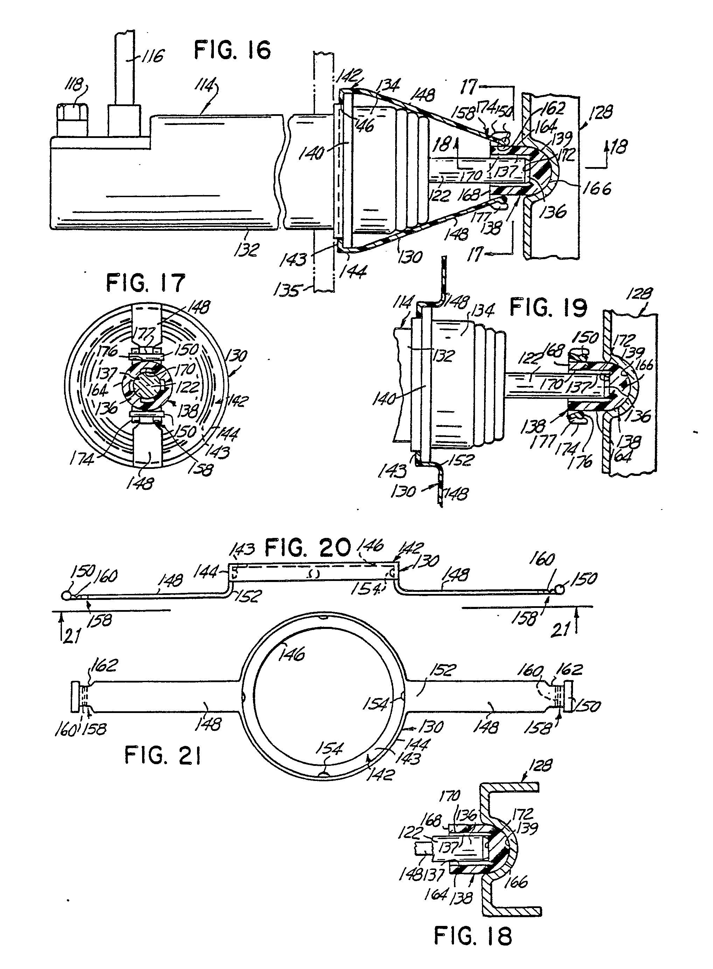

A modified restraining and centering shipping and installation strap, as represented by the example of strap 30c of FIGS. 12—15, is particularly adapted for retaining and centering the output member of a linear actuator such as the slave cylinder piston rod 22, FIG. 12, having a cylindrical end 90 provided with a flat end face 92. The strap 30c is substantially alike the strap 30a of FIGS. 8 and 9, i.e. having a pair of band or strips 72 terminating each at one end in an integrally molded strut 74, substantially at right angle to the axis of each band or strip, having a portion introduced in a receiving recess 76 in the annular flange 78 formed proximate the end of the slave cylinder housing 32, FIG. 12. The strips or bands 72 diametrically project from the edge of a substantially hemispherical retaining member 94, integrally molded therewith and joined thereto by way of weakened portions 58 each in the form of a groove 80. The substantially hemispherical retainer member 94 has coaxial blind bores 96 forming a bottom surface 98 against which abut the end face 92 of the rod cylindrical end 90, when the strap 30c is installed with its retaining member 94 placed over the end 90 of the rod 22, the rod cylindrical end 90 being introduced into the retaining member bore 96. The retaining member bore 96 is preferably provided with a plurality of longitudinal grooves 100, best shown at FIG. 15, for aid in installation of the restraining strap 30c to allow air or oil to escape from the bore 96 when the retaining member 94 is pushed over the rod end 90.

When the slave cylinder 14 is first operated, the bands or strips 72 separate or break away from the substantially hemispherical retaining member 94 at the surface grooves 80 forming the weakened sections 58 of the strap. In the structure of FIGS. 12—15, the substantially hemispherical retaining member 94 is molded with a substantial wall thickness, and remains in position, as shown at FIG. 13, during operation of the clutch release mechanism. The peripheral surface of the retaining member 94 actually forms a spherical bearing interposed between the flat end face 92 of the piston rod 22 and the end of the clutch release control member 26.

Referring now to FIG. 16, there is illustrated a slave cylinder 114 having a housing 132 attached to a bracket 135, or other member, forming part of the clutch bell housing or transmission housing, not shown. The end 136 of the slave cylinder piston rod or actuator 122 is engaged in the central bore 137 of a separate nosepiece 138 forming a bearing member between the rod end 136 and a generally hemispherical recess 139 in the clutch release lever 128. A strap 130 together with the nosepiece 138, forms a restraining means for the piston rod or actuator 122.

The slave cylinder housing 132 is provided with a peripheral annular flange 140, and the strap 130 has a corresponding annular flange collar 142, FIGS. 16 and 21, comprising an annular flange 143 formed on one side of a cylindrical rim 144 fitting over the housing annular flange 140, the strap annular flange collar 142 forming an opening 146 fitting over the slave cylinder housing 132. A pair of diametrally disposed bands or strips 148 are molded integrally with the annular flange 143 at one of their ends and provided with an integral bar or strut member 150 at their other end. The strap 130 is preferably molded of plastic such as a polyamide (nylon), and the bands or strips 148 are relatively flexible. The strap 130 is molded in the shape illustrated at FIGS. 20 and 21, i.e. with a pre-formed bend 152 proximate the end of each band or strip 148 joined to the rim 144 of the annular flange collar 142. Preferably, a plurality of small projecting nibs 154 are formed on the inner surface of the cylindrical rim 144 for providing a relatively tight elastic fit of the cylindrical rim 144 of the annular flange collar 142 over the slave cylinder flange 140. The other end of each band or strip 148 is provided with a weakened portion 158 where it is integrally molded with the bar or strut member 150, each weakened portion 158 being in the form of a reduced thickness portion as shown at 160, resulting from a surface groove, most clearly shown at FIG. 20, or a reduced width portion, as shown at 162 at FIG. 21, or both.

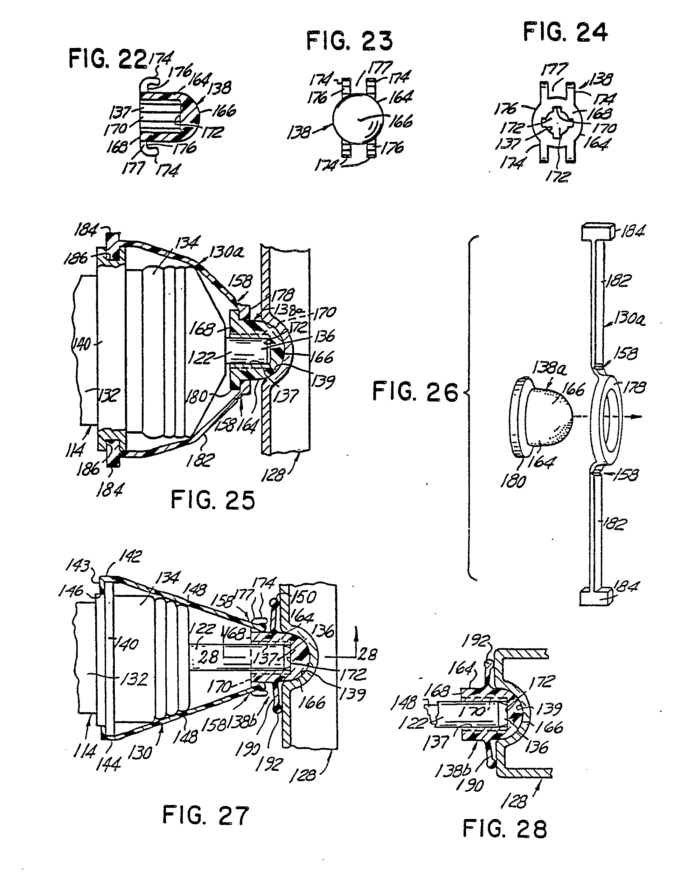

The nosepiece 138, as best shown at FIGS. 22—24, is in the form of a cylindrical cap having a generally cylindrical body 164 provided on one end with a generally hemispherical face portion 166 and on the other with a flat annular end face 168 through which is disposed the bore 137. The bore 137 is provided with a plurality of longitudinal grooves 170 on its surface, such as to facilitate introduction therethrough of the end 136 of the slave cylinder piston rod 122, the bore 137 terminating in a flat surface 172 against which the face of the end 136 of the piston rod 122 normally engages when the nosepiece 138 is installed over the piston rod end. A pair of symmetrically disposed bifurcated ears 174 integrally radially project from the cylindrical body 164 of the nosepiece 138 proximate the annular end face 168 thereof, and each bifurcated ear 174 is provided with a partially cylindrical notch 176 forming a hook for attachment thereover of the bar or strut member 150 at the end of each band or strip 148, the reduced width portion 162, for example, of the band or strip 148 being disposed within the bifurcation gap 177 of each bifurcated ear 174, as shown at FIGS. 16 and 17. The nosepiece 138 may be made of the same material as the strap 130, or of a different material and, if so desired, it may be made of metal. Whatever the material used for making the nosepiece 138, it is so dimensioned that its hemispherical end face 166 fits within the partially spherical recess 138 in the clutch release lever 128, such as to provide a generally swivelling connection between the slave cylinder piston rod 122 and the clutch release lever 128. The swivelling connection compensates for relative inaccuracy in alignment of the diverse elements, and allows pivoting of the clutch release lever 128 during operation of the clutch mechanism, the hemispherical end face 166 of the nosepiece 138, and the partially spherical recess 139 co-operating for forming a ball and socket bearing arrangement between the end 136 of the piston rod 122 and the clutch release lever 128.

After installation of the hydraulic apparatus in a motor vehicle, the first time the clutch release mechanism is actuated by operating the clutch pedal, hydraulic fluid is supplied from the master cylinder, when the piston rod of the master cylinder is reciprocated, to the slave cylinder 114 through the line or conduit 116, such that the slave cylinder piston rod 122 is extended. Although the weakened portions 158 of the bands or strips 148 of the strap 130 are capable of holding the slave cylinder piston rod 122 in its retracted and centered position during shipping, storage and installation of the hydraulic apparatus in a motor vehicle, the force exerted on the slave cylinder piston during the first operation of the clutch release causes the strap bands or strips 148 to break away from the bar members 150, FIG. 19, when the piston rod 122 is extended, thus subsequently permitting normal operation of the slave cylinder 114.

An example of further modification of the invention is illustrated at FIGS. 25—26 wherein a shipping and installation strap 130a is illustrated as comprising a ring 178 disposed over a separate cup-shaped piston rod retaining member or nosepiece 138a placed over the end 136 of the piston rod 122 of a slave cylinder 114, FIG. 25. The cylindrical body portion 164 of the nosepiece 138a has a radially extending annular flange 180 engaged with the rear of the ring 178. The ring 178 is provided with diametrally disposed bands or strips 182 each having an integral strut 184 formed on the end thereof, substantially at right angle to the axis of each band or strip 182. The inner end of each strut 184 is introduced in a receiving recess 186 formed in the annular flange 140 disposed proximate the end of the slave cylinder housing 132. A weakened portion 158, for example in the form of a break-away groove, is formed at the junction between the other end of each band or strip 182 and the ring 178 such that, when hydraulic fluid is fed to the slave cylinder 114, thus causing its piston rod 122 to extend, the bands or strips 182 separate at the weakened portions 158 from the ring 178 and free the cup-shaped nosepiece 138a, and consequently the piston rod 122, for normal operation. It can be seen that in this modification of the invention, the nosepiece 138a also acts as the ball portion of a ball and socket bearing member interposed between the end 136 of the piston rod 122 and the clutch release lever 128 provided with a generally hemispherical recess 138 engaged by the hemispherical end 166 of the nosepiece 138a.

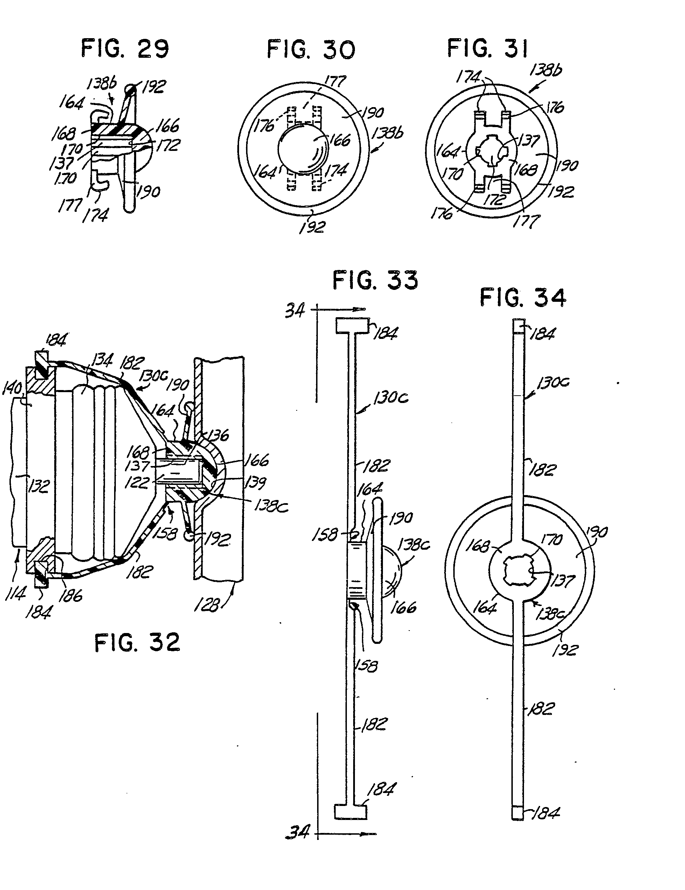

The structure illustrated at FIG. 27 comprises a retaining strap 130 identical to the restraining strap 130 of FIGS. 16—21 combined with a modified nosepiece 138b having a disc-like sealing member 190 integrally formed therewith and projecting in a flange-like fashion from the cylindrical body portion 164 of the nosepiece, and provided with a toroidal integral rim 192. As best shown at FIGS. 29—30, the disc-like sealing member 190, in a relaxed state, is slightly dished towards the hemispherical end face 166 of the nosepiece 138b, such that when the slave cylinder 114 is installed in a motor vehicle for actuating the clutch release lever 128, FIGS. 27—28, the toroidal rim 192 is urged in engagement with the surface of the clutch release lever 128 around the perimeter of the generally hemispherical recess 139 in which is engaged the hemispherical end face 166 of the nosepiece 138b. The disc-like sealing member 190 thus forms an effective seal preventing the introduction of dirt from the ambient and the surroundings between the bearing surfaces formed by the surface of the hemispherical end face 166 and the generally hemispherical recess 139, which could cause rapid wearing of the bearing surfaces in engagement.

As illustrated at FIGS. 32—34, restraining straps of the type disclosed herein, that is comprising a nosepiece, such as the nosepiece 138c, formed integrally with the strap 130c, may also be provided with disc-like sealing member 190 formed integral with the nosepiece and radially projecting from the cylindrical body portion 164 of the nosepiece. In the structure illustrated at FIGS. 32—34, the retaining strap portion 130c of the integral assembly has the general structure comprised of bands or strips 182 provided at an end each with a strut 184 engaged in an appropriate recess 186 in the flange 140 of the slave cylinder housing 132. The other end of each band or strip 182 is integrally attached to the nosepiece 138c by a weakened portion 158, for example in the form of a reduced width portion, such as to readily separate from the nosepiece upon first actuation of the slave cylinder 114. After separation of the nosepiece 138c from the bands or strips 182, the nosepiece acts as a bearing member interposed between the end 136 of the piston rod 122 and the recess 139 in the clutch release arm 128, the flexible disc-like sealing member 190 frictionally sealing the bearing surfaces against any dirt from the surroundings.

It will be appreciated by those skilled in the art that the present invention, although disclosed for illustrative purposes in specific structures in conjunction with a specific hydraulic apparatus, has many practical applications in shipping and installing diverse linear actuators of any form whatsoever wherein it is desired to restrain against displacement the actuator output member until after installation, and to free the output member for normal operation upon first acuation.

**Claims**

1. A shipping and installation restraining strap (30, 130) for an actuator (14, 114) having a housing (32, 132) and a linearly movable output member (22, 122) projecting from said housing, said strap comprising at least one retaining member (54, 70, 94, 138) for engagement with the end (36, 136) of said output member, at least one strip (48, 50, 72, 148, 182) having an end attached to said retaining member, and attachment means for attaching the other end of said strip to a non-movable portion (40, 140) of the housing of said actuator, said strip having a portion of reduced strength (58, 158) whereby said strip may be ruptured at said portion of reduced strength upon first operation of said actuator.

2. A strap according to Claim 1, characterised in that said portion of reduced strength comprises a portion of reduced width (62, 162) and/or a portion of reduced thickness (60, 80, 180).

3. A strap according to Claim 1 or Claim 2, characterised in that a pair of strips (48, 50, 72, 148, 182) are symmetrically arranged and each attached at an end to a common attachment means (42, 142) or a common retaining member (70, 94).

4. A strap according to any preceding claim, characterised in that the or each retaining member comprises a partially spherical cap member (54, 70, 94, 138).

5. A strap according to any preceding claim, characterised in that means (150, 178) removably attach an end of said strips (148, 182) to the retaining member (138).

6. A strap according to Claim 4 or Claim 5, characterised in that the cap member (138b, 138c) further comprises an annular sealing flange (190).

7. A strap according to Claim 3, characterised in that said common attachment means comprises a collar (42, 142) for abutment with a flange on the housing.

8. A strap according to any one of Claims 1 to 6, characterised in that said attachment means comprises pillars (74) or lugs (82).

9. A method of shipping and installing an actuator (14, 114) having a housing (32, 132) and a linearly movable output member (22, 122), said method comprising restraining said output member (22, 122) in a retracted position by means of a strap according to any one of Claims 1 to 8 whereby said strip (48, 50, 72, 148, 182) is caused to break and free the output member upon first actuation of the actuator after installation.

10. A method of shipping and installing apparatus (10) for operating a motor vehicle clutch, said apparatus comprising a master cylinder (12), a hydraulic actuator (14, 114) and a conduit (16) connecting said master cylinder and said hydraulic actuator, said actuator having a housing (32, 132) and a linearly movable ouput member (22, 122), said method comprising restraining said output member (22, 122) in a retracted position by means of a strap (30, 130) according to any one of Claims 1 to 8, pre-filling said apparatus with hydraulic fluid and installing said apparatus on a motor vehicle while maintaining said output member (22, 122) of said hydraulic actuator (14, 144) in said retracted position by means of said strap, whereby said strip (48, 50, 72, 148, 182) is caused to break and free the output member upon first actuation of said apparatus after installation on the motor vehicle.

11. An actuator (14, 114) having a housing (32, 132) and a linearly movable output member (22, 122) characterised in that a shipping and installation strap (30, 130) according to any one of Claims 1 to 8 is provided to restrain said output member (22, 122) in a retracted position.

12. Apparatus (10) for operating a motor vehicle clutch, said apparatus comprising a master cylinder (12), a hydraulic actuator (14, 114) and a conduit (16) connecting said master cylinder and said hydraulic actuator, said actuator having a housing (32, 132) and a linearly movable output member (22, 122), characterised in that a shipping an installation strap (30, 130) according to any one of Claims 1 to 8 is provided to restrain said output member (22, 122) in a retracted position.

13. An actuator (14, 114) having a housing (32, 132) and a linearly movable output member (22, 122) characterised in that the actuator (14, 114) has been shipped and installed by a method according to Claim 9.

14. Apparatus (10) for operating a motor vehicle clutch, said apparatus comprising a master cylinder (12), a hydraulic actuator (14, 114) and a conduit connecting said master cylinder and said hydraulic actuator, said actuator having a housing (32, 132) and a linearly movable output member (22, 122) characterised in that said apparatus (10) has been shipped and installed on a motor vehicle by a method according to Claim 10.

**Patentansprüche**

1. Transport- und Einbauhalteband (30, 130) für ein Stellglied (14, 114), das ein Gehäuse (32, 132) und ein geradlinig bewegliches Ausgabeglied (22, 122) hat, das von dem Gehäuse vorsteht, wobei das Band mindestens ein Halteteil (54, 70, 94, 138) zum Eingriff mit dem Ende (36, 136) des Ausgabegliedes, mindestens einen Streifen (48, 50, 72, 148, 182), von dem ein Ende an dem Halteglied befestigt ist, und Befestigungsmittel zum Befestigen des anderen Endes des Streifens an einem nicht beweglichen Teil (40, 140) des Gehäuses des Stellgliedes aufweist, wobei der Streifen einen Abschnitt mit verminderter Stärke (58, 158) hat, wodurch der Streifen an dem Abschnitt mit verminderter Stärke beim ersten Betrieb des Stellgliedes zerrissen werden kann.

2. Band nach Anspruch 1, dadurch gekennzeichnet, daß der Abschnitt mit verminderter Stärke einen Abschnitt mit verminderter Breite (62, 162) und/oder einen Abschnitt mit verminderter Dicke (60, 80, 180) aufweist.

3. Band nach Anpsruch 1 oder Anspruch 2, dadurch gekennzeichnet, daß ein Paar Streifen (48, 50, 72, 148, 182) symmetrisch angeordnet sind und jeder an einem Ende an einem gemeinsamen Befestigungsmittel (42, 142) oder einem gemeinsamen Halteteil (70, 94) befestigt ist.

4. Band nach irgendeinem vorhergehenden Anspruch, dadurch gekennzeichnet, daß das oder jedes Halteteil ein teilweise kugelförmiges Kappenteil (54, 70, 94, 138) aufweist.

5. Band nach irgendeinem vorhergehenden Anspruch, dadurch gekennzeichnet, daß Mittel (150, 178) ein Ende der Streifen (148, 182) lösbar an dem Halteteil (138) befestigen.

6. Band nach Anspruch 4 oder Anspruch 5, dadurch gekennzeichnet, daß das Kappenteil (138b, 138c) weiterhin einen ringförmigen Dichtflansch (190) aufweist.

7. Band nach Anspruch 3, dadurch gekennzeichnet, daß das gemeinsame Befestigungsmittel einen Ring (42, 142) zum Anstoßen an einen Flansch des Gehäuses aufweist.

8. Band nach irgendeinem der Ansprüche 1 bis 6, dadurch gekennzeichnet, daß die Befestigungsmittel Säulen (74) oder Nasen (82) aufweisen.

9. Verfahren zum Transportieren und Einbauen eines Stellgliedes (14, 114), das ein Gehäuse (32, 132) und ein geradlinig bewegliches Ausgabeglied (22, 122) hat, wobei das Verfahren darin besteht, daß das Ausgabeglied (22, 122) mittels eines Bandes gemäß irgendeinem der Ansprüche 1 bis 8 in einer zurückgezogenen Stellung gehalten wird, wodurch der Streifen (48, 50, 72, 148, 182) bei der ersten Betätigung des Stellgliedes nach dem Einbau brechen und das Ausgabeglied freigeben gelassen wird.

10. Verfahren zum Transportieren und Einbauen einer Vorrichtung (10) zum Betätigen einer Kraftfahrzeugkupplung, wobei die Vorrichtung einen Steuerzylinder (12), ein hydraulisches Stellglied (14, 114) und eine Leitung (16) aufweist, welche den Steuerzylinder und das hydraulische Stellglied verbindet, wobei das Stellglied ein Gehäuse (32, 132) und ein geradlinig bewegliches Ausgabeglied (22, 122) hat, wobei das Verfahren darin besteht, daß das Ausgabeglied (22, 122) mittels eines Bandes (30, 130) gemäß irgendeinem der Ansprüche 1 bis 8 in einer zurückgezogenen Stellung gehalten, die Vorrichtung mit Hydraulikfluid vorgefüllt und die Vorrichtung in ein kraftfahrzeug eingebaut wird, während das Ausgabeglied (22, 122) des hydraulischen Stellgliedes (14, 144) mittels des Bandes in der zurückgezogenen Stellung gehalten wird, wodurch der Streifen (48, 50, 72, 148, 182) bei der ersten Betätigung der Vorrichtung nach dem Einbau in das Kraftfahrzeug brechen und das Ausgabeglied freigeben gelassen wird.

11. Stellglied (14, 114) mit einem Gehäuse (32, 132) und einem geradlinig beweglichen Ausgabeglied (22, 122), dadurch gekennzeichnet, daß ein Transport- und Einbauband (30, 130) nach irgendeinem der Ansprüche 1 bis 8 vorgesehen ist, um das Augsabeglied (22, 122) in einer zurückgezogenen Stellung zu halten.

12. Vorrichtung (10) zum Betätigen einer Kraftfahrzeugkupplung, mit einem Steuerzylinder (12), einem hydraulischen Stellglied (14, 114) und einer Leitung (16), welche den Steuerzylinder und das hydraulische Stellglied verbindet, wobei das Stellglied ein Gehäuse (32, 132) und ein geradlinig bewegliches Ausgabeglied (22, 122) hat, dadurch gekennzeichnet, daß ein Transport- und Einbauband (30, 130) gemäß irgendeinem der Anprüche 1 bis 8 vorgesehen ist, um das Ausgabeglied (22, 122) in einer zurückgezogenen Stellung zu halten.

13. Stellglied (14, 114) mit einem Gehäuse (32, 132) und einem geradlinig beweglichen Ausgabeglied (22, 122), dadurch gekennzeichnet, daß das Stellglied (14, 114) nach einem Verfahren gemäß Anspruch 9 transportiert und eingebaut worden ist.

14. Vorrichtung (10)· zum Betätigen einer Kraftfahrzeugkupplung, mit einem Steuerzylinder (12), einem hydraulischen Stellglied (14, 114) und einer Leitung, welche den Steuerzylinder und das hydraulische Stellglied verbindet, wobei das Stellglied ein Gehäuse (32, 132) und ein geradlinig bewegliches Ausgabeglied (22, 122) hat, dadurch gekennzeichnet, daß die Vorrichtung (10) nach einem Verfahren gemäß Anspruch 10 transportiert und in ein Kraftfahrzeug eingebaut worden ist.

**Revendications**

1. Sangle de retenue (30, 130) pour l'expédition et le montage d'un dispositif d'actionnement (14, 114) comportant un carter (32, 132) et un organe de sortie mobile linéairement (22, 122) faisant saillie dudit carter, ladite sangle comprenant au moins un organe de retenue (54, 70, 94, 138) pour coopérer avec l'extrémité (36, 136) dudit organe de sortie, au moins une bande (48, 50, 72, 148, 182) ayant une extrémité fixée sur ledit organe de retenue, et des moyens de fixation pour fixer l'auture extrémité de ladite bande à une partie non mobile (40, 140) du carter dudit dispositif d'actionnement, ladite bande ayant une partie de résistance réduite (58, 158) grâce à quoi ladite bande peut être rompue audit emplacement de résistance réduite à la suite du premier actionnement dudit dispositif d'actionnement.

2. Sangle suivant la revendication 1, caractérisée en ce que ladite partie de résistance réduite est constituée par une portion de largeur réduite (62, 162) et/ou d'une partie d'épaisseur réduite (60, 80, 180).

3. Sangle suivant la revendication 1 ou 2, caractérisé en ce qu'une paire de bandes (48, 50, 72, 148, 182) sont disposées symétriquement et fixés chacune par une extrémité à un dispositif de fixation commun (42, 142) ou à un organe de retenue classique (70, 94).

4. Sangle suivant l'une quelconque des revendications précédentes, caractérisée en ce que l'organe de retenue ou chaque organe de retenue est constitué par un chapeau partiellement sphérique (54, 70, 94, 138).

5. Sangle suivant l'une quelconque des revendications précédentes, caractérisée en ce que des moyens (150, 178) fixent de façon amovible une extrémité desdites bandes (148, 182) sur l'organe de retenue (138).

6. Sangle suivant la revendication 4 ou 5, caractérisée en ce que le chapeau (138b, 138c) comprend en outre des rebords d'étanchéité annulaires (190).

7. Sangle suivant la revendication 3, caractérisée en ce que le dispositif de fixation commun comprend une collerette (42, 142) pour venir en butée avec une collerette sur le carter.

8. Sangle suivant l'une quelconque des revendications 1 à 6, caractérisée en ce que le dipositif de fixation comprend des supports (74) ou des languettes (82).

9. Procédé pour expédier et monter un dispositif d'actionnement (14, 114) comportant un carter (32, 132) et un organe de sortie (22, 122) déplaçable linéairement, ce procédé étant caractérisé en ce qu'on retient ledit organe de sortie (22, 122) dans une position rétractée au moyen d'une sangle suivant l'une quelconque des revendications 1 à 8, de sorte que ladite band (48, 50, 72, 148, 182) est astreinte à se rompre et à libérer l'organe de sortie à la suite du premier actionnement du dispositif d'actionnement après son montage.

10. Procédé d'expédition et de montage d'un appareil (10) pour actionner un embrayage d'un véhicule à moteur, ledit appareil comprenant un maître-cylindre (12), un dispositif hydraulique d'actionnement (14, 114) et un tuyau (16) reliant ledit maître-cylindre et ledit dispositif hydraulique d'actionnement, le dispositif d'actionnement comprenant un carter (32, 132) et un organe de sortie (22, 122) mobile linéairement, ledit procédé comprenant la retenue dudit organe de sortie (22, 122) dans une position rétractée au moyen d'une sangle (30, 130) suivant l'une quelconque des revendications 1 à 8, un remplissage préalable dudit appareil avec un fluide hydraulique et le montage dudit appareil sur un véhicule à moteur tout en retenant ledit organe de sortie (22, 122) dudit dispositif hydraulique d'actionnement (14, 144) dans ladite position rétractée au moyen de ladite sangle, de sorte que ladite bande (48, 50, 72, 148, 182) est astreinte à se rompre et à libérer l'organe de sortie à la suite du premier actionnement dudit appaeil après le montage sur le véhicule à moteur.

11. Dispositif d'actionnement (14, 114) comportant un carter (32, 132) et un organe de sortie (22, 122) déplaçable linéairement, caractérisé en ce qu'une sangle (30, 130) d'expédition et de montage suivant l'une quelconque des revendications 1 à 8 est prévue pour retenir ledit organe de sortie (22, 122) dans une position rétractée.

12. Appareil (10) pour actionner un embrayage de véhicule à moteur, ledit appareil comprenant un maître-cylindre (12), un dispositif hydraulique d'actionnement (14, 114) et un tuyau (16) reliant ledit maître-cylindre et ledit dispositif hydraulique d'actionnement, le dispositif d'actionnement ayant un carter (32, 132) et un organe de sortie (22, 122) déplaçable linéairement, caractérisé en ce qu'une sangle (30, 130) d'expédition et de montage suivant l'une quelconque des revendications 1 à 8 est prévue pour retenir ledit organe de sortie (22, 122) dans une position rétractée.

13. Dispositif d'actionnement (14, 114) comportant un carter (32, 132) et un organe de sortie (22, 122) déplaçable linéairement, caractérisé en ce que le dispositif d'actionnement (14, 114) a été expédié et monté au moyen d'un procédé suivant la revendication 9.

14. Appareil (10) pour actionner un embrayage de véhicule à moteur, ledit appareil comprenant un maître-cylindre (12), un dispositif hydraulique d'actionnement (14, 114) et un conduit reliant ledit maître-cylindre et ledit dispositif d'actionnement hydraulique, ledit dispositif d'actionnement comportant un carter (32, 132) et un organe de sortie (22, 122) mobile linéairement, caractérisé en ce que ledit appareil (10) a été expédie et monté sur un véhicule à moteur au moyen d'un procédé suivant la revendication (10).

FIG.1

FIG.3

FIG.2

FIG.4

FIG.5

FIG.8

FIG.9

FIG.6

FIG. 7

FIG. 10

FIG. 11

FIG.12

FIG.13

FIG.14

FIG.15

FIG. 16

FIG. 17

FIG. 19

FIG. 20

FIG. 21

FIG. 18

0 086 060

FIG. 22  FIG. 23  FIG. 24

FIG. 25

FIG. 26

FIG. 27

FIG. 28

6

FIG. 29

FIG. 30

FIG. 31

FIG. 33

FIG. 34

FIG. 32